# EUROPÄISCHE PATENTANMELDUNG

(11) **EP 1 669 155 A1**
(43) Veröffentlichungstag der Anmeldung: **14.06.2006**
(21) Anmeldenummer: 05024962.2
(22) Anmeldetag: 15.11.2005
(51) Int. Cl.: B23K 11/31

(54) **Schweißzange**

(30) Priorität: 26.11.2004 DE 202004018418 U
(71) Anmelder: PCM planning consulting management GmbH, 36093 Künzell (DE)
(72) Erfinder: Röll, Wilhelm, 36166 Haunetal/Wehrda (DE)
(74) Vertreter: Olbricht, Karl Heinrich

(57) **Zusammenfassung**

Eine Schweißzange zum elektrischen Punktschweißen z.B. von sich berührenden Blechflanschen (52) hat zwei leitende Zangenarme (10) mit je einem stufenweise drehbaren Elektrodenhalter (12) und einem Revolverkopf ( ), der einen kühlbaren Buchsenkörper ( ) aufweist, an dem eine runde oder mehreckige Elektrodenscheibe (14) lösbar befestigt ist. Sie trägt am Umfang in Drehrichtung versetzt eine Anzahl länglicher Schweißelektroden (16), bevorzugt äquidistant verteilt, mit den Längsseiten in Drehrichtung der Elektrodenhalter (12) und in Längsrichtung der Blechflansche (52). Rechtwinklig zu diesen verlaufen die Drehachsen der Elektrodenhalter (12) parallel zueinander, so daß sich in jeder Drehstufe zwei Elektroden (16) in Schweißposition gegenüberstehen. Die Zangenarme (10) und Elektrodenhalter (12) weisen strömungsverbundene, nach außen abgedichtete Kühlkanäle (36, 38, 40) auf. Die Elektrodenhalter (12) sind mit ihrem Zangenarm (10) durch koaxial ineinandergreifende, zylindrische Bereiche (18, 46; 20) in elektrischem Kontakt, während jede Elektrodenscheibe an einer Stimfläche des Buchsenkörpers leitend anliegt. Zur Verrastung der Elektrodenscheibe (14) wirkt wenigstens eine axiale Lagefixierbohrung (32) mit einem Paßstift (34) zusammen, während ein Raststift bzw. Arretierbolzen (54) die Drehstufen durch Eingriff an einer Lagefixiemut (56) des Buchsenkörpers (46) definiert.

## Beschreibung

Die Erfindung betrifft eine Schweißzange gemäß dem Oberbegriff von Anspruch 1.

Bei bekannten Schweißzangen besteht der Nachteil, daß die Abnutzung der Schweißelektroden, die dann auszuwechseln oder nachzubearbeiten sind, zu langen Betriebsunterbrechungen führen kann. Das ist teuer und zeitaufwendig.

Neuere Schweißzangen zum Punktschweißen von Blechflanschen ermöglichen deutlich längere Betriebszeiten. Vor allem für flächig aneinander anschließende oder sich überlappende, kurze Blechflansche haben sich Revolverelektroden bewährt, die in stufenweise drehbaren Elektrodenhaltern an den freien Enden zweier Zangenarme gehalten sind und in gleichförmiger Umfangsverteilung eine Anzahl von Schweißelektroden aufweisen. Dadurch stehen sich in jeder Drehstufe der Elektrodenhalter jeweils zwei Elektroden in Schweißposition gegenüber. Nach Abnutzung des gerade verwendeten Schweißelektrodenpaars hat man durch einfaches Dreh-Fortschalten der zugeordneten Elektrodenhalter sofort zwei neue, noch unbenutzte Schweißelektroden zur Verfügung, und zwar mit kurzen Stillstandszeiten.

Jeder Elektrodenhalter hat oder bildet einen Revolverkopf mit einer Buchsenkörper, der stirnseitig an einer radial überkragenden, kreisrunden oder mehreckigen Scheibe die am Umfang nach außen vorstehenden Schweißelektroden trägt. Er ist um seine Mittelachse stufenweise rastend drehbar und steht mit dem zugehörigen Zangenarm durch koaxial ineinandergreifende, zylindrische Bereiche in ständigem elektrischem Kontakt. Innenseitig sind am Elektrodenhalter axiale Positionsfixierbohrungen ringförmig verteilt, in die jeweils ein Paßstift des benachbarten Zangenarms einführbar ist, wenn der Elektrodenhalter gegen Federkraft etwas axialverlagert und zu einer nächsten Elektrodenstufe vorgedreht wird. Miteinander im jeweiligen Zangenarm und im zugeordneten Elektrodenhalter strömungsverbundene Kühlkanäle sind im Schweißelektroden-Inneren von einem Kühlmittel durchströmbar, was deren Kühlung auch während des Drehschaltens der Elektrodenhalter erlaubt. Ringförmige Kühlkanäle in unmittelbarer Nähe der Schweißelektroden können die erhitzten Teile intensiv kühlen.

Trotz überzeugender Vorzüge dieser Konstruktion bleiben Wünsche offen, zumal nach Vereinfachung der Bauweise sowie längerer Standzeit der Elektroden und mithin selteneren Unterbrechungen im Schweißbetrieb. Es ist daher ein wichtiges Ziel der Erfindung, eine Schweißzange der vorgenannten Art so auszugestalten, daß bei kostengünstiger Fertigung und einfacher Benutzbarkeit eine weiter gesteigerte Standzeit der Schweißelektroden erreicht wird, so daß Betriebsunterbrechungen noch seltener eintreten.

Hauptmerkmale der Erfindung sind in Anspruch 1 angegeben. Ausgestaltungen sind Gegenstand der Ansprüche 2 bis 18.

Eine Schweißzange zum elektrischen Punktschweißen von sich überlappenden und kontaktierenden Werkstücken, z.B. Blechflanschen, mit zwei relativ zueinander beweglichen, elektrisch leitenden Zangenarmen, deren freien Enden jeweils einen elektrisch leitenden, stufenweise dreh- und verrastbaren Elektrodenhalter mit einer kühlbaren Buchse und einem Revolverkopf aufweisen, dem umfangsseitig jeweils eine Anzahl von Schweißelektroden so zugeordnet ist, daß sie im Schweißbetrieb in paarweiser Gegenüberstellung zu verschweißende Werkstücke berühren, zeichnet sich erfindungsgemäß laut Anspruch 1 dadurch aus, daß der Revolverkopf zweiteilig ist, indem er eine Elektrodenscheibe mit den Schweißelektroden und einen Aufnahmeteil mit einem Buchsenkörper aufweist, an dem die Elektrodenscheibe lösbar gehaltert ist. Diese bildet mithin ein austauschbares Verschleißstück, das kostengünstig hergestellt werden kann. Wenn es erneuert werden muß, kann der weiterverwendbare Aufnahmeteil samt Rasteinrichtung am Elektrodenhalter unveränderlich montiert bleiben, was die Wartung und Instandhaltung stark erleichtert.

Eine Ausgestaltung sieht vor, daß jeweils Zangenarm, Elektrodenhalter und Buchsenkörper durch koaxial ineinandergreifende, zylindrische Bereiche in ständigem elektrischem Kontakt verbunden sind, während die Elektrodenscheibe in stirnseitigem Flächenschluß an dem Buchsenkörper leitend anliegt. Dadurch ist das ungestörte Fließen des elektrischen Schweißstroms zuverlässig gewährleistet.

Die Elektrodenscheibe kann außenseitig ein zentrisches Senkloch zur bündigen Aufnahme einer Schraube aufweisen, die mit einem Stahl-Gewindeeinsatz schraubt, der in dem zugeordneten Buchsenkörper drehfest gehaltert ist. Zum Entnehmen einer verbrauchten Elektrodenscheibe muß man daher nur die eine zentrale Schraube lösen, die zur Befestigung einer neuen Elektrodenscheibe wiederverwendbar ist.

Konstruktiv ist es günstig, wenn der allgemein pilzförmige Buchsenkörper stirnseitig eine axial vorstehende, vorzugsweise ringförmige Anlagefläche für die zugehörige Elektrodenscheibe aufweist, wodurch ein gut stromleitender Übergang sehr einfach sichergestellt ist. Außerdem kann der Buchsenkörper innenseitig einen zylindrischen Fortsatz aufweisen, der als zentrischer Lagerzapfen in einer Bohrung des Elektrodenhalters geführt und axial gesichert ist, wobei der Elektrodenhalter einen abgestuften zentrischen Durchbruch haben kann, durch den sich der zylindrische Fortsatz erstreckt, dessen freies Ende durch einen Sicherungsring axial festgelegt ist. Wahlweise oder zusätzlich kann der Elektrodenhalter stirnseitig einen zentrisch angeordneten, zylindrischen Vorsprung aufweisen, der in eine ihn umfassende sowie führende zylindrische Aufnahmevertiefung des zugehörigen Buchsenkörpers eingreift. Diese Bauweise ergibt hohe Formsteifigkeit und Stabilität.

Zweckmäßig stehen die Schweißelektroden über den Umfang der kreisrund oder mehreckig ausgebildeten Elektrodenscheibe radial nach außen vor. Sie können in Umfangs- bzw. Drehrichtung der Elektrodenscheibe daran jeweils äquidistant verteilt angeordnet sein. Wenn die Drehachsen der Elektrodenscheiben zumindest im Schweißbetrieb etwa parallel zueinander und rechtwinklig zur Längserstreckung paralleler Blechflansche ausgerichtet sind, kann man diese selbst bei ungewöhnlicher Kürze kantennah verschweißen, d.h. dicht an den Flanschwurzeln. Zu günstigem Ansetzen der Schweißzange trägt ferner bei, daß die Schweißelektroden in Umfangs- bzw. Drehrichtung der Elektrodenscheiben langgestreckt ausgebildet sein können, beispielsweise oval, elliptisch oder rechteckig. Indem die Schweißelektroden jeweils längliche Form aufweisen und ihre Längsseiten sich in Umfangs- bzw. Drehrichtung der Elektrodenscheibe erstrecken, können die Längsseiten der in Schweißposition einander gegenüberstehenden Elektroden der Elektrodenscheiben nämlich in Längsrichtung zu verschweißender Blechflansche verlaufen, wodurch sich längliche Schweißflächen ergeben, die besonders nahe neben den Flanschkanten bzw. -hohlkehlen auch sehr schmaler, d.h. in Querrichtung kurzer Flansche liegen können.

Drehstufen des Revolverkopfes lassen sich auf einfache Weise durch an der inneren Stirnseite des Buchsenkörpers verteilte Lagefixierausnehmungen definieren, beispielsweise durch Umfangskerben, in die wenigstens ein im Elektrodenhalter federnd geführter Arretierbolzen einrastbar ist. Eine eindeutige Festlegung erzielt man, indem ein stirnseitig nahe dem Umfang des Buchsenkörpers befindlicher Paßstift an der inneren Stirnseite der Elektrodenscheibe mit dieser verrastet.

An jedem Zangenarm können die Elektrodenhalter und die zugehörigen Buchsenkörper in ständiger Strömungsverbindung stehende Kühlkanäle aufweisen, die von einem Kühlmittel durchströmbar und in allen Betriebszuständen nach außen abgedichtet sind und die in jedem Buchsenkörper bis in unmittelbare Nähe ihrer Stirnfläche führen können. So erreicht man eine große Kühlfläche an der Elektrodenscheibe, wenn auch mit indirekter Kühlung wegen des unvermeidlichen Trennspalts zwischen ihr und dem Buchsenkörper. Zudem resultiert der große Vorteil des Scheibenwechsels ohne die Notwendigkeit, Kühlwasser ablassen zu müssen, so daß alle Passungen und Dichtringe an Ort und Stelle verbleiben.

Separat ausgebildete, vom Elektrodenhalter lösbare Schweißelektroden sind insbesondere dann vorteilhaft, wenn teure und/oder schwer bearbeitbare Materialien eingesetzt werden. Zwar lassen sich auch Schweißelektroden aus herkömmlichen Legierungen wie CuCrZr verwenden, doch wird erfindungsgemäß hochtemperaturfestes Hartmetall wie CuAlTi bevorzugt, das unter dem Handelsnamen "Nitrode" erhältlich ist.

Weitere Einzelheiten, Merkmale und Vorteile der Erfindung ergeben sich aus dem Wortlaut der Ansprüche sowie den nachfolgend erläuterten Ausführungsbeispielen anhand der Zeichnung. Darin zeigen:
Fig. 1 eine Schrägansicht einer erfindungsgemäßen Schweißzange,
Fig. 2 eine Seitenansicht von Elektrodenhaltern mit Revolverköpfen in Schweißposition,
Fig. 3 eine Explosionsansicht der Bestandteile eines Elektrodenhalters,
Fig. 4 eine Axialschnittansicht eines Elektrodenhalters mit Revolverkopf und
Fig. 5 eine Schrägansicht eines Elektrodenhalters mit Revolverkopf.

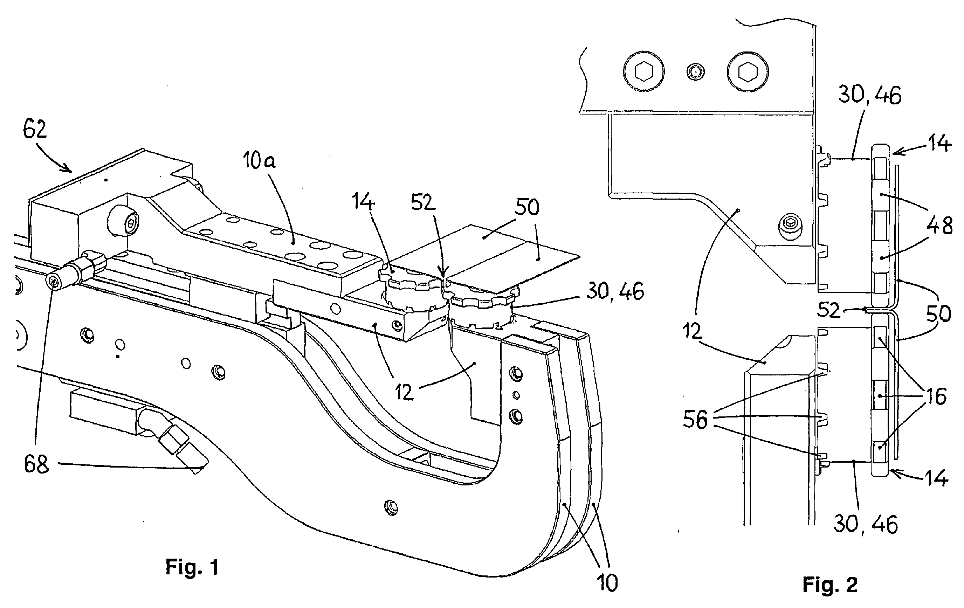

In einer schematisierten Schrägansicht zeigt Fig. 1 eine erfindungsgemäße Schweißzange mit Zangenarmen 10, 10a, die jeweils einen Elektrodenhalter 12 tragen. Stufenweise drehbar ist an den Elektrodenhaltern 12 je ein Revolverkopf 30 angeordnet, der eine lösbar befestigte Elektrodenscheibe 14 trägt. Diese ist mit Schweißelektroden 16 versehen, die zwischen Ausnehmungen 48 am Umfang gleichförmig verteilt sind und radial über den Buchsenkörper 46 vorstehen. Im Schweißbetrieb werden zu verbindende Bleche 50 mit ihren Blechflanschen 52 zwischen den Elektrodenscheiben 14 hindurchgeführt, so daß die Schweißelektroden 16 paarweise daran angreifen können. Fig. 2 veranschaulicht die Schweißposition.

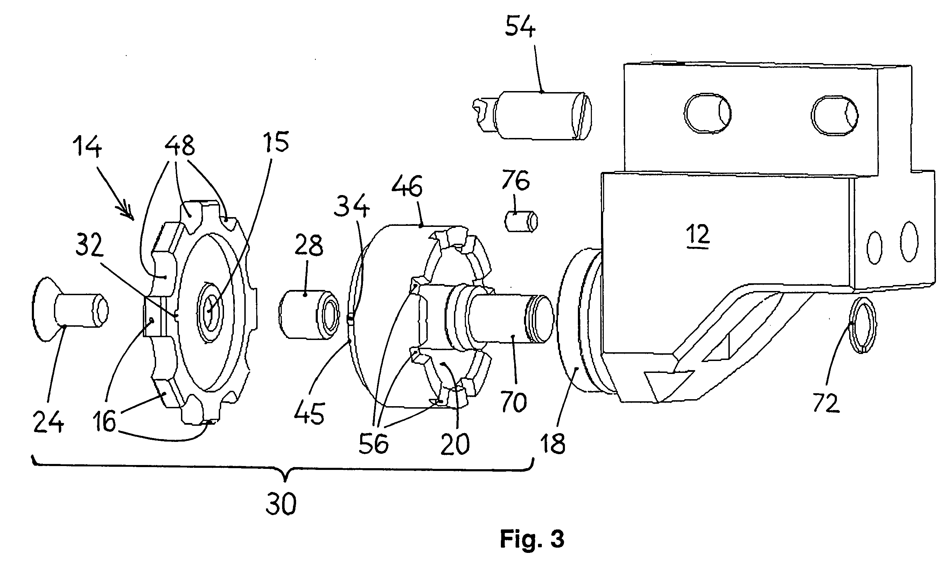

In auseinander gezogener Schrägansicht von unten/innen zeigt Fig. 3 die Bestandteile eines Revolverkopfes 30 in Verbindung mit einem Elektrodenhalter 12. Man erkennt, daß die Elektrodenscheibe 14 ein Mittelloch 15 zur Aufnahme einer Schraube 24 hat, die mit einem im Buchsenkörper 46 gehalterten Gewindeeinsatz 28 schraubt. Der Buchsenkörper 46 bildet einen Hohlzylinder, dessen innerer bzw. unterer Rand Lagefixiernuten 56 aufweist. Diese sind radial gerichtet und entsprechen in Anzahl und Umfangsverteilung den Ausnehmungen 48 bzw. Schweißelektroden 16. Ein zentrisch angeordneter Fortsatz bzw. Schaft 70 ist in eine (hier nicht sichtbare) Lagerbohrung 22 einführbar und mit einem Sicherungsring 72 axial festlegbar. Ferner weist der Elektrodenhalter 12 stirnseitig einen zentrischen Vorsprung 18 auf, der in eine ihn umfassende sowie führende, formgleiche oder formähnliche Aufnahmevertiefung 20 des zugehörigen Buchsenkörpers 46 eingreift.

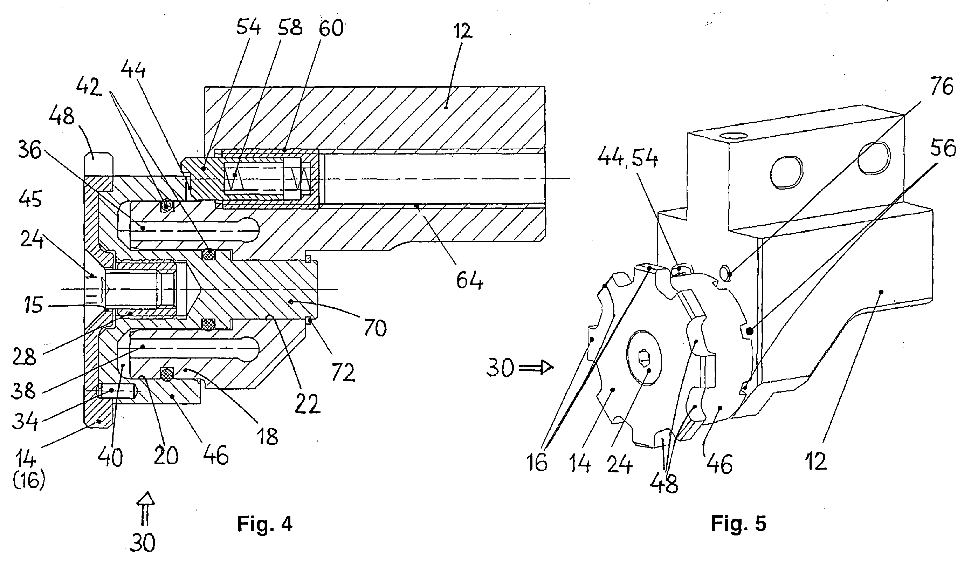

In der Zusammenschau zeigen Fig. 4 und 5 einen Elektrodenhalter 12 in Verbindung mit dem daran montierten Revolverkopf 30. Man erkennt, daß die Elektrodenscheibe 14 durch das Mittenloch 15 hindurch von der Schraube 24 am Buchsenkörper 46 festgelegt wird, die an einem Gewindeeinsatz 28 angreift. Die Drehstufen des Buchsenkörpers 46 werden durch dessen Verrastung 44 am Elektrodenhalter 12 bestimmt. Dabei greift ein Arretierbolzen oder Raststift 54, dessen Außenende gestuft sein kann, unter Abstützung einer Feder 58 in einem Gewindeeinsatz 60 an einer der Nuten 56 an. Wird er zurückgedrückt, so ist der Revolverkopf 30 weiter drehbar, bis er in einer gewünschten (nächsten) Drehstufe unter Entlastung des gefederten Arretierbolzens 54 einrastet.

Aus Fig. 4 ist ersichtlich, daß vom Elektrodenhalter 12 aus ein zulaufseitiger Versorgungskanal 36 ein Kühlmittel in einen Ring- oder Kühlkanal 40 zuführt, das von dort durch einen rücklaufseitigen Versorgungskanal 38 abströmt. Die Kanäle 36, 38 haben möglichst große lichte Weite, um entsprechend große Durchflußmengen zuzulassen. Ferner wird die vom Ring- bzw. Kühlkanal 40 gekühlte Stirnfläche ebenfalls groß bemessen, um von der daran flächig anliegenden Elektrodenscheibe 14 her maximalen Wärmeübergang zu bewirken. Ringdichtungen 42 sorgen für zuverlässige Abdichtung nach innen und außen in jeder Stellung des Revolverkopfes 30.

Die Zangenarm 10, 10a bestehen allgemein aus Kupfer, d.h. aus einem relativ weichen Material. Ihre Lebensdauer wird erheblich verlängert, wenn die Befestigung des bzw. jedes Elektrodenhalters 12 durch Stahl-Gewindeeinsätze 28, 60 unterstützt wird, in welche eine Schraube 24 bzw. der Arretierbolzen 54 eingreift.

Vorteilhaft bestehen die Schweißelektroden 16 aus einem Hartmetall wie CuAlTi, dessen Erweichungstemperatur mit ca. 1000 °C erheblich höher liegt als bei dem gebräuchlichen CuCrZr, das bei etwa 600 °C erweicht. Infolgedessen sind die Elektroden sehr viel formfester und dauerhafter als herkömmlich, so daß zwei- bis dreifache Standzeiten erzielbar sind. Unabhängig davon ist eine Nachbearbeitung durch eine (nicht dargestellte) Feil- oder Fräseinrichtung möglich.

Die Erfindung ist nicht auf die vorbeschriebenen Ausführungsformen beschränkt, sondern in vielfältiger Weise abwandelbar. Ein Zangenantrieb 62 kann die daran gehaltenen Zangenarme 10, 10a bewegen, um den Abstand zwischen benachbarten Schweißelektroden 16 der beiden Elektrodenhalter 12 bzw. der Elektrodenscheiben 14 zu verändem. Der Antrieb 62 kann außerdem (in nicht dargestellter Art) für schrittweises Fortschalten der benachbarten Schweißelektroden 16 jeder Scheibe 14 sorgen, z.B. indem er die Elektrodenhalter 12 axial fixiert, die Zangenarme 10, 10a - gegebenfalls entgegen einer Federkraft - axial zurückzieht, die Elektrodenhalter 12 samt den Scheiben 14 verdreht bzw. verschwenkt und die ursprüngliche axiale Position wiederherstellt. Das ermöglicht es, beim Punktschweißen ohne nennenswerte Arbeitsunterbrechung einen schnellen Austausch der aktiven Schweißelektroden durch noch unverbrauchte Schweißelektroden 16 vorzunehmen. Dieser Vorgang erleichtert und beschleunigt auch ein Schleif-Nachbearbeiten aller Schweißelektroden 16.

Man erkennt, daß eine Schweißzange zum elektrischen Punktschweißen z.B. von sich berührenden Blechflanschen 52 bevorzugt zwei leitende Zangenarme 10 mit je einem stufenweise drehbaren Elektrodenhalter 12 mit einem Revolverkopf 30 hat, der erfindungsgemäß zweiteilig aus einer runden oder mehreckigen Elektrodenscheibe 14 als Verschleißteil und aus einem Aufnahmeteil mit einem kühlbaren Buchsenkörper 46 aufgebaut ist, an dem die Elektrodenscheibe 14 mit nur einer Schraube 24 lösbar befestigt ist. Sie trägt am Umfang in Drehrichtung versetzt eine Anzahl länglicher Schweißelektroden 16. Diese bestehen vorzugsweise aus einem Hartmetall wie CuAlTi und sind am Umfang der Elektrodenscheibe 14 z.B. äquidistant verteilt, mit den Längsseiten in Drehrichtung der Elektrodenhalter 12 und in Längsrichtung der Blechflansche 52. Rechtwinklig zu diesen verlaufen die Drehachsen der Elektrodenhalter 12 parallel zueinander, so daß sich in jeder Drehstufe zwei Elektroden 16 in Schweißposition gegenüberstehen. Die Zangenarme 10, 10a und Elektrodenhalter 12 weisen strömungsverbundene, nach außen abgedichtete Kühlkanäle 36, 38, 40 auf. Die Elektrodenhalter 12 sind mit ihrem Zangenarm 10 bzw. 10a durch koaxial ineinandergreifende, zylindrische Bereiche 18, 46; 20 in elektrischem Kontakt, während jede Elektrodenscheibe 14 an einer Stirnfläche des Buchsenkörpers 46 leitend anliegt. Zur Verrastung der Elektrodenscheibe 14 wirkt wenigstens eine axiale Lagefixierbohrung 32 mit einem Paßstift 34 zusammen, während ein Raststift bzw. Arretierbolzen 54 die Drehstufen durch Eingriff an einer Lagefixiernut 56 des Buchsenkörpers 46 definiert.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- 10, 10a: Zangenarme
- 12: Elektrodenhalter
- 14: Elektrodenscheibe
- 15: Mittenloch
- 16: Schweißelektroden
- 18: zylindrischer Vorsprung
- 20: Aufnahmevertiefung
- 22: Durchbruch / Lagerbohrung
- 24: Schraube
- 26: Schraubenkopf
- 28: Gewindeeinsatz
- 30: Revolverkopf
- 32: Lagefixierbohrungen / -kerben
- 34: Paßstift
- 36: zulaufseitiger Versorgungskanal
- 38: rücklaufseitiger Versorgungskanal
- 40: Kühlkanal / Ringkanal
- 42: Ringdichtungen
- 44: Verrastung / Rastmittel
- 45: Anlagefläche
- 46: Buchsenkörper
- 48: (Umfangs-)Ausnehmungen
- 50: zu verbindende Bleche
- 52: Blechflansche
- 54: Arretierbolzen / Raststift
- 56: Lagefixiernuten
- 58: Feder
- 60: Gewindeeinsatz
- 62: Zangenantrieb
- 64: Gewindebohrung
- 66: Kontakt / Druckstift
- 68: Anschlüsse
- 70: Fortsatz / Schaft
- 72: Sicherungsring
- 74: Gewindeeinsätze
- 76: Druckstift / Kontakt

## Patentansprüche

1. Schweißzange zum elektrischen Punktschweißen von sich überlappenden und kontaktierenden Werkstücken, z.B. Blechflanschen, mit zwei relativ zueinander beweglichen, elektrisch leitenden Zangenarmen (10), deren freien Enden jeweils einen elektrisch leitenden, stufenweise dreh- und verrastbaren Elektrodenhalter (12) mit einer kühlbaren Buchse und einem Revolverkopf (30) aufweisen, dem umfangsseitig jeweils eine Anzahl von Schweißelektroden (16) so zugeordnet ist, daß sie im Schweißbetrieb in paarweiser Gegenüberstellung zu verschweißende Werkstücke (52) berühren, **dadurch gekennzeichnet, daß** der Revolverkopf (30) zweiteilig ist, indem er eine Elektrodenscheibe (14) mit den Schweißelektroden (16) und einen Aufnahmeteil mit einem Buchsenkörper (46) aufweist, an dem die Elektrodenscheibe (14) lösbar gehaltert ist.

2. Schweißzange nach Anspruch 1, **dadurch gekennzeichnet, daß** jeweils Zangenarm (10), Elektrodenhalter (12) und Buchsenkörper (46) durch koaxial ineinandergreifende, zylindrische Bereiche (18, 46; 20) in ständigem elektrischem Kontakt verbunden sind und daß die Elektrodenscheibe (14) in stimseitigem Flächenschluß an dem Buchsenkörper (46) leitend anliegt.

3. Schweißzange nach Anspruch 1 oder 2, **dadurch gekennzeichnet, daß** die Elektrodenscheibe (12) außenseitig ein zentrisches Senkloch (15) zur bündigen Aufnahme einer Schraube (24) aufweist, die mit einem Gewindeeinsatz (28) schraubt, der in dem zugeordneten Buchsenkörper (46) drehfest gehaltert ist.

4. Schweißzange nach einem der Ansprüche 1 bis 3, **dadurch gekennzeichnet, daß** der allgemein pilzförmige Buchsenkörper (46) stirnseitig eine axial vorstehende, vorzugsweise ringförmige Anlagefläche (45) für die zugehörige Elektrodenscheibe (14) aufweist.

5. Schweißzange nach einem der Ansprüche 1 bis 4, **dadurch gekennzeichnet, daß** der Buchsenkörper (46) innenseitig einen zylindrischen Fortsatz (70) aufweist, der als zentrischer Lagerzapfen oder -schaft in einer Bohrung (22) des Elektrodenhalters (12) geführt und axial gesichert ist.

6. Schweißzange nach Anspruch 5, **dadurch gekennzeichnet, daß** der Elektrodenhalter (12) einen abgestuften zentrischen Durchbruch (22) aufweist, durch den sich der zylindrische Fortsatz (70) erstreckt, dessen freies Ende durch einen Sicherungsring (72) axial festgelegt ist.

7. Schweißzange nach einem der Ansprüche 1 bis 6, **dadurch gekennzeichnet, daß** der Elektrodenhalter (12) stirnseitig einen zentrisch angeordneten Vorsprung (18) aufweist, der in eine ihn umfassende sowie führende, formgleiche oder formähnliche Aufnahmevertiefung (20) des zugehörigen Buchsenkörpers (46) eingreift.

8. Schweißzange nach einem der Ansprüche 1 bis 7, **dadurch gekennzeichnet, daß** die Schweißelektroden (16) über den Umfang der kreisrund oder mehreckig ausgebildeten Elektrodenscheiben (14) radial nach außen vorstehen.

9. Schweißzange nach einem der Ansprüche 1 bis 8, **dadurch gekennzeichnet, daß** die Schweißelektroden (16) in Umfangs- bzw. Drehrichtung der Elektrodenscheiben (14) daran jeweils äquidistant verteilt angeordnet sind.

10. Schweißzange nach einem der Ansprüche 1 bis 9, **dadurch gekennzeichnet, daß** die Drehachsen der Elektrodenscheiben (14) zumindest im Schweißbetrieb etwa parallel zueinander und rechtwinklig zur Längserstreckung der zu verschweißenden Blechflansche (52) ausgerichtet sind.

11. Schweißzange nach einem der Ansprüche 1 bis 10, **dadurch gekennzeichnet, daß** die Schweißelektroden (16) in Umfangs- bzw. Drehrichtung der Elektrodenscheiben (14) langgestreckt ausgebildet sind, beispielsweise oval, elliptisch oder rechteckig.

12. Schweißzange nach einem der Ansprüche 1 bis 11, **dadurch gekennzeichnet, daß** die Schweißelektroden (16) jeweils längliche Form aufweisen und ihre Längsseiten sich in Umfangs- bzw. Drehrichtung der Elektrodenscheibe (14) erstrecken, so daß die Längsseiten der in Schweißposition einander gegenüberstehenden Schweißelektroden (16) der beiden Elektrodenscheiben (14) in Längsrichtung zu verschweißender Blechflansche (52) verlaufen.

13. Schweißzange nach einem der Ansprüche 1 bis 12, **dadurch gekennzeichnet, daß** Drehstufen durch an der inneren Stirnseite des Buchsenkörpers (46) verteilte axiale Lagefixiernuten (56) definiert sind, in die wenigstens ein im Elektrodenhalter (12) fedemd geführter Arretierbolzen (54) einrastbar ist.

14. Schweißzange nach einem der Ansprüche 1 bis 13, **dadurch gekennzeichnet, daß** ein stirnseitig nahe dem Umfang des Buchsenkörpers (46) befindlicher Paßstift (34) an der inneren Stirnseite der Elektrodenscheibe (14) mit dieser verrastbar ist.

15. Schweißzange nach einem der Ansprüche 1 bis 14, **dadurch gekennzeichnet, daß** an jedem Zangenarm (10) die Elektrodenhalter (12) und die zugehörigen Buchsenkörper (46) in ständiger Strömungsverbindung stehende Kühlkanäle (36, 38, 40) aufweisen, die von einem Kühlmittel durchströmbar und in allen Betriebszuständen nach außen abgedichtet sind.

16. Schweißzange nach Anspruch 15, **dadurch gekennzeichnet, daß** die Kühlkanäle (40) in jedem Buchsenkörper (46) sich bis in unmittelbare Nähe seiner Stirnfläche erstrecken.

17. Schweißzange nach einem der Ansprüche 1 bis 16, **dadurch gekennzeichnet, daß** die Oberflächen der Schweißelektroden (16) durch eine z.B. linear bewegliche Schleifvorrichtung nachbearbeitbar sind.

18. Schweißzange nach einem der Ansprüche 1 bis 17, **dadurch gekennzeichnet, daß** die Schweißelektroden (16) aus hochtemperaturfestem Hartmetall wie CuAlTi bestehen.
